# FASCICULE DE BREVET EUROPEEN

(11) **EP 0 643 510 B1**
(45) Date de publication et mention de la délivrance du brevet: **08.03.2000**
(21) Numéro de dépôt: 94402018.9
(22) Date de dépôt: 09.09.1994
(51) Int. Cl.: H04L 1/18

(54) **Procédé de transmission à répétition automatique de blocs de données utilisant des codes poinçonnés compatibles en débit**
Verfahren zur Übertragung von Datenblöcken mit ratenkompatiblen punktierten Faltungscodes (RCPC) und automatischer Wiederholung
Method for transmission of data blocks using rate-compatible punctured convolutional codes (RCPC) and automatic retransmission

(30) Priorité: 13.09.1993 FR 9310879
(43) Date de publication de la demande: 15.03.1995
(73) Titulaire: THOMSON-CSF, 75008 Paris (FR)
(72) Inventeur: Merel, Dominique, F-92402 Courbevoie Cédex (FR); Pirez, Didier, F-92402 Courbevoie Cédex (FR)
(74) Mandataire: Lincot, Georges

(56) Documents cités:
- ELECTRONICS & COMMUNICATIONS IN JAPAN, PART I - COMMUNICATIONS, vol.76, no.6, Juin 1993, NEW YORK US pages 25 - 35 M. MIYAGI / T. NIINOMI / I. SASASE / S. MORI: 'Selective Repeat Type-II Hybrid FEC/ARQ Systems Using Concatenated Codes.'
- International Conference on Communications ICC '87, Seattle, US, 07.-10.06.1987, vol. 1, pages 744-748, IEEE, New York, US; J. HAGENAUER: 'Hybrid ARQ/FEC Protocols on Fading Channels Using Rate Compatible Punctured Convolutional Codes.'
- IEEE COMMUNICATIONS MAGAZINE, vol.22, no.12, Décembre 1984, PISCATAWAY, NJ US pages 5 - 17 S. LIN / D. J. COSTELLO / M. J. MILLER: 'Automatic Repeat Request Error Control Schemes.'

## Description

La présente invention concerne un procédé de transmission à répétition automatique de blocs de données utilisant des codes poinçonnés compatibles en débit. Elle s'applique aux systèmes de transmission de données par voie radio, notamment aux systèmes dans lesquels la contrainte est un taux d'erreurs final très bas, cette contrainte justifiant une procédure de type ARQ de l'abréviation anglo-saxonne "Automatic Repeat reQuest", dans laquelle les blocs de données qui n'ont pas été transmis correctement sont répétés.

Les procédures ARQ ont subi une évolution considérable pour s'adapter à des canaux de transmission dont les caractéristiques sont changeantes ou mal connues au départ.

Dans une procédure ARQ, les données à transmettre sont regroupées en blocs, chaque bloc étant codé par un code détecteur d'erreurs. Le bloc est transmis, et le destinataire tente le décodage. En cas de détection d'erreurs, il demande une retransmission ; dans le cas contraire, il indique à l'émetteur que le décodage a été correct.

Dans la procédure la plus simple ("STOP AND WAIT" en anglais), la transmission s'effectue bloc par bloc, et l'émetteur attend pour transmettre le bloc suivant un accusé positif sur le bloc en cours.

Dans une procédure plus évoluée ("GO BACK N" en anglais), l'émetteur continue à émettre des nouveaux blocs tant qu'il n'a pas reçu d'accusé positif ou négatif. Lorsqu'il a reçu un accusé négatif sur un bloc particulier, il remonte jusqu'à ce bloc et reprend la transmission à ce niveau, retransmettant le bloc erroné et tous les suivants.

Dans un dernier type de procédure ("SELECTIVE REPEAT"), on ne répète que les blocs déclarés faux. Cette procédure suppose une mémoire importante à la réception et à l'émission pour conserver les blocs de données correctement décodés pendant le temps nécessaire à la transmission correcte d'un bloc de données antérieur.

Ces procédures ont également évoluées dans une autre direction, qui est d'utiliser en plus du code détecteur d'erreurs, un code correcteur.

La raison essentielle est que la procédure classique donne rapidement de très mauvais résultats à partir d'un certain seuil de rapports signal à bruit ou de taux d'erreurs. Le code correcteur d'erreurs permet de repousser plus loin ce seuil ; en contrepartie le débit maximal que l'on peut passer dans de bonnes conditions de canal est diminué par la redondance du code correcteur. Ce type de procédure est appelé procédure ARQ hybride.

Pour corriger cet inconvénient, une autre évolution est apparue, pour donner des procédures ARQ dites hybrides de type II, les premières devenant hybrides de type I.

Le principe de ces procédures de type II est de ne transmettre les symboles de redondance du code correcteur qu'en cas de besoin, c'est-à-dire si le bloc utile n'a pas été décodé correctement. Dans ce cas on ne retransmet pas le bloc de données d'origine, mais tout ou une partie des symboles de redondance. Le récepteur peut alors tenter le décodage du code correcteur avec les symboles utiles transmis la première fois, et qu'il a gardé en mémoire, et ses symboles de redondance. Si le décodage échoue encore une fois, on peut retransmettre selon les stratégies d'autres symboles de redondance, ou encore le bloc d'origine.

Une procédure ARQ hybride de type II classique utilise un code convolutionnel de redondance 2. Cette procédure est décrite dans l'article de MM. Shulin, Daniel J. Costello, M. J. Miller ayant pour titre "Automatic repeat request error control shemes" IEEE magazin Dec. 84 vol. 22 N° 12 p. 5. Chacun des polynômes de ce code est inversible, c'est-à-dire qu'en l'absence d'erreurs de transmissions, on peut retrouver le message utile. La procédure consiste à répéter alternativement chacun des deux polynômes jusqu'à décodage correct.

L'efficacité en termes de débit utile des différentes procédures précédemment évoquées en fonction du taux d'erreurs est variable.

Les procédures classiques (non hybrides), présentent un débit maximal intéressant, mais une chute spectaculaire à partir d'un certain seuil de taux d'erreurs. Les procédures hybrides de type I résistent mieux lorsque le taux d'erreurs augmente mais ont en contrepartie un débit maximal plus faible. Les procédures hybrides de type II, telles que celle précédemment évoquée, ont un débit maximal important et une bonne résistance aux forts taux d'erreurs mais ont cependant un effet de seuil à la moitié du débit maximal, qui correspond à la retransmission du deuxième polynôme.

L'idéal serait en fait d'atteindre la limite théorique représentée par l'enveloppe de toutes ces courbes. L'utilisation des codes poinçonnés compatibles en débit est une tentative pour atteindre cette enveloppe.

L'idée d'utiliser des codes convolutionnels poinçonnés est assez ancienne en transmission. Elle consiste à partir d'un code de redondance entière assez élevée, à éliminer au moment de la transmission un certain nombre de bits codés selon un motif connu à l'avance. Le résultat est un code de redondance inférieure au premier, éventuellement fractionnaire (2/3, 4/5, ...). Le décodeur remplace simplement les bits non transmis par des 0.

L'intérêt de cette technique est de pouvoir atteindre une grande dynamique de redondances possibles avec le même code, et donc avec le même décodeur, les opérations de poinçonnage et de dépoinçonnage étant très simples à réaliser.

La compatibilité en débit des codes convolutionnels poinçonnés est une propriété supplémentaire qui permet des applications plus nombreuses. Il s'agit de faire en sorte que les tables de poinçonnage soient incluses les unes dans les autres, c'est-à-dire que les bits transmis pour une simple redondance donnée le soient également pour la redondance supérieure ; il leur est simplement adjoint des bits supplémentaires. Cette propriété a été développée essentiellement par M. J. Hagenauer dans un article ayant pour titre "hybrid ARQ protocols on Fading Channels Using rate compatible picturated convolutional codes" IEEE - ICC 1987 - 21-4-1. Pour des applications diverses, telle que le codage correcteur d'erreurs appliqué à la phonie vocodée, et les transmissions de données par procédure ARQ, M. Hagenauer montre qu'il est possible de trouver des codes convolutionnels et des tables de poinçonnage vérifiant la propriété de compatibilité en débit, en gardant des performances proches des meilleurs codes pour chaque redondance.

L'utilisation des codes poinçonnés compatibles en débit dans une procédure ARQ hybride de type II consiste à réaliser le codage d'un bloc de données par un code externe détecteur d'erreurs, le résultat étant codé par un code convolutionnel poinçonné.

A la première transmission, le bloc de données est transmis avec le poinçonnage maximal (redondance minimale). En cas de non décodage, la deuxième transmission pour ce bloc concerne le complément de redondance nécessaire pour atteindre le poinçonnage suivant dans la table de poinçonnage. Le décodage s'effectue alors conjointement avec les échantillons déjà transmis gardés en mémoire et les nouveaux échantillons ; en tentant de décoder un code de redondance légèrement supérieure. Le processus se poursuit ainsi jusqu'à obtention du décodage correct, ou atteinte de la redondance maximale (la redondance du code non poinçonné). Dans ce dernier cas, une procédure particulière est à prévoir pour retransmettre le bloc.

Ainsi dans le cas général, si la redondance maximale n'est pas dépassée, la redondance atteinte pour chaque bloc est exactement celle qui est nécessaire à son décodage correct. L'adaptativité en débit est alors automatique, bloc par bloc et il est possible de montrer que si les pas d'incrémentation de la redondance sont suffisamment fins, le débit utile obtenu doit suivre la courbe enveloppe des techniques précédentes.

Un procédure de ce type est connu par le document 'Sélective Repeat, Type II Hybrid FEC/ARQ Systems Using Concatenated Codes'. Electronics & Communications in Japon, Part I -Communications, vol. 76, no.6, Juin 1993, New York US pages 25-35.

Cependant la mise en oeuvre pratique d'une telle procédure dans le cadre d'une transmission HF, avec un canal de retour qui peut être extrêmement bruité, présente une première difficulté qui provient du fait qu'au fur et à mesure de l'évolution des tables de poinçonnage pour les différents blocs, la quantité d'informations à transmettre pour un bloc donné peut varier considérablement en cas de mauvaise réception d'un accusé de réception et il y a un risque de désynchroniser complètement les deux participants à la liaison. Une deuxième difficulté est liée à l'utilisation de l'entrelacement sur la voie aller. En effet, les codes convolutionnels n'obtiennent leurs meilleures performances que sur un canal sans mémoire. Pour obtenir un canal sans mémoire à partir d'un canal physique qui, lui, présente de la mémoire, on utilise l'entrelacement des symboles codés. Cet entrelacement implique un retard au décodage, avant la transmission de l'accusé sur le bloc de données considéré. Pour éviter de gaspiller la durée considérée, les trames suivantes sont transmises avant que l'accusé ne soit transmis. L'accusé est donc transmis au milieu d'une trame de données. Pour que ce soit possible sans perte d'information, les deux intervenants doivent être entièrement synchrones.

Le but de l'invention est de pallier les inconvénients précités.

A cet effet, l'invention a pour objet un procédé de transmission à répétition automatique de blocs de données utilisant des codes poinçonnés compatibles en débit, à l'alternat entre un appeléet un appelant dans lequel les blocs de données sont organisés en trame de longueur variable et entrelacée caractérisé en ce qu'il consiste à faire émettre un accusé de réception par l'appelé dès qu'il a reçu de l'appelant un nombre déterminé de blocs formant une super trame et à faire interrompre la transmission de l'émetteur appelant aux instants d'émission de l'accusé de réception.

D'autres caractéristiques et avantages de l'invention apparaîtront dans la description qui suit faite en regard des dessins annexés qui représentent :
- La figure 1 une chaîne de transmission pour la mise en oeuvre du procédé selon l'invention ;
- La figure 2 une décomposition d'un bloc de données par poinçonnage ;
- La figure 3 un schéma d'entrelacement de trames ARQ avec accusé de réception.

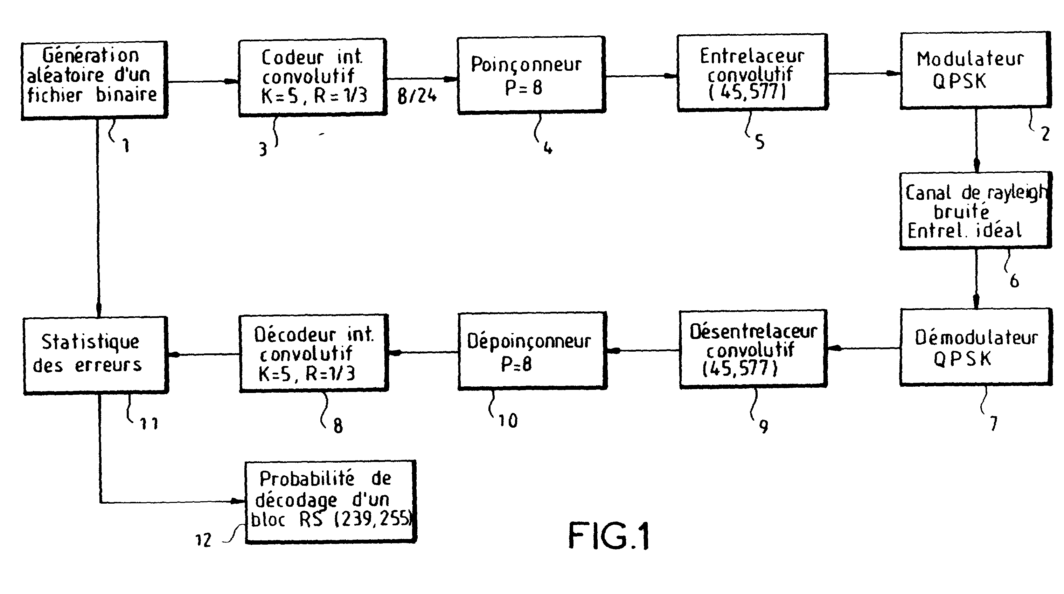

Le procédé de transmission selon l'invention est décrit ci-après à titre non limitatif, dans le cadre de transmissions radioélectriques HF entre modems série utilisant une forme d'onde normalisée suivant la norme STANAG 4285. Pour cette forme d'onde, l'unité temporelle de base est celle de la trame modem, dont la durée qui est d'environ 106 ms permet de véhiculer 128 symboles utiles de modulation. La modulation utilisée est une modulation QPSK à 4 états de phases, ce qui conduit à 256 bits utiles transmis. La chaîne de transmission utilisée est celle représentée à la figure 1. Elle comporte un générateur aléatoire de fichier binaire 1 couplé à un modulateur 2 QPSK par l'intermédiaire d'un codeur interne convolutif 3, d'un dispositif poinçonneur 4 et d'un entrelaceur convolutif 5. Le canal de transmission figuré en 6 est supposé être un canal de Rayleigh bruité. Côté réception la chaîne comprend un démodulateur QPSK, couplé à un décodeur intra convolutif par l'intermédiaire d'un désentrelaceur convolutif 9 et d'un dépoinçonneur 10. Un calcul de statistique d'erreur est effectué par un dispositif de calcul statistique 11 placé en sortie du décodeur 8 et piloté par le générateur aléatoire 1. Un dispositif de calcul 12 détermine la probabilité de décodage de chaque bloc reçu.

Pour simplifier la gestion du temps nécessaire et assurer la synchronisation de la partie émission et la partie réception, l'unité de temps minimale est définie sur un nombre de trames modem.

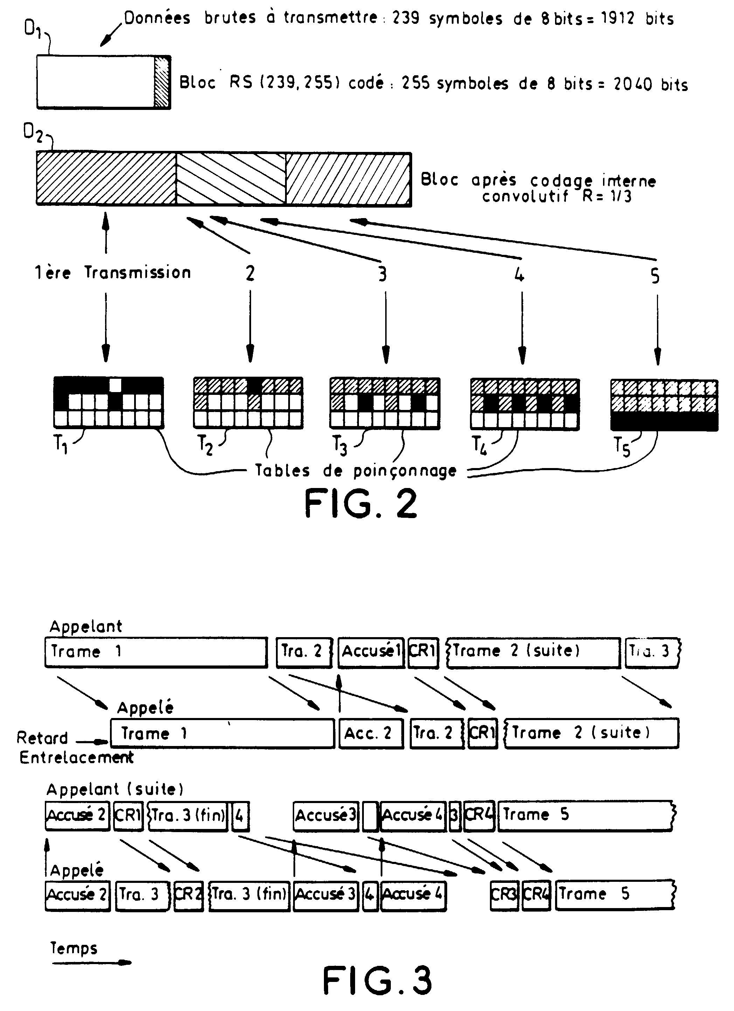

Les données à transmettre sont découpées en blocs et sont codées de la manière représentée à la figure 2 par un code détecteur correcteur d'erreurs type Reed-Solomon (RS) étendu sur des symboles de 8 bits. Ainsi dans l'exemple de la figure 2 le bloc de données brutes à transmettre D₁ comporte 239 symboles de 8 bits et le bloc RS correspondant est un bloc RS(239, 255) comportant 255 symboles de 8 bits.

Chaque bloc de données ainsi codé est ensuite protégé en interne par le codeur interne 3 par un code convolutionnel de longueur de contrainte k = 5 et de redondance 3 du type Hagenauer.

Pour tenir compte du retard au décodage nécessaire pour obtenir les meilleurs performances possibles des codes convolutionnels, il est ajouté dans le message à coder un certain nombre de bits ne portant pas d'information utile. Typiquement, un retard au décodage de 40 bits utiles convient pour un code convolutionnel de ce type et ses versions poinçonnées. Compte tenu de la redondance il est ajouté au message utile 120 bits. Le bloc résultat est figuré en D₂ sur la figure 2.

Des tables de poinçonnage sont associées à ce code par le dispositif poinçonneur 4. Ces tables, telles qu'elles sont représentées en T₁, T₂, T₃, T₄ et T₅ sur la figure 2 ont une période de répétition de 8 bits utiles et définissent les bits codés à transmettre parmi 24 (en raison de la redondance 3). Les paquets de bits en cours de transmission sont dans les tables représentés par des cases noires, ceux effectivement transmis sont dans des cases hachurées.

Les redondances disponibles vont dans le rapport 8/N où N varie de 9 à 24. La plus petite quantité d'information à transmettre correspond à un incrément de redondance pour passer par exemple de la redondance 8/9 à la redondance 8/10 conduisant ainsi à transmettre qu'un bit supplémentaire pour 8 bits utiles. Ainsi si le code RS a une longueur de N₁ symboles, la quantité d'information minimale est définie sur N₁+5 bits en tenant compte de 40 bits utiles ajoutés pour compenser le retard du codeur convolutionnel 3. A titre d'exemple, N₁ = 251 permet de faire correspondre la quantité d'information minimale à une trame modem.

Pour éviter de changer trop souvent le sens de la liaison, l'accusé de réception des blocs "ACCUSE #" a lieu de la manière représentée à la figure 3, c'est-à-dire n'est transmis qu'après réception d'un nombre déterminé de ceux-ci, 64, par exemple, pour former une super trame. Dans ce cas, les 64 premiers blocs formant une super trame sont transmis une première fois avec le code interne de redondance minimale 8/9 vers l'entrelaceur 5. L'entrelaceur 5 est de type convolutionnel. Les bits entrelacés sont ensuite regroupés sous forme de symboles QPSK pour être émis par le modulateur 2. Du fait que le processus d'entrelacement et de désentrelacement introduit un retard qui peut atteindre quelques dizaines de secondes sur le canal HF, l'accusé de réception "ACCUSE #" est transmis comme le montre la figure 3 qu'après ce retard. De la sorte, l'appelant, pour ne pas perdre tout ce temps, commence toujours à émettre les 64 blocs suivants immédiatement après les 64 premiers.

Lorsque l'appelé a terminé le décodage des 64 premiers blocs, il transmet un accusé de réception, qui n'est pas entrelacé. Cet accusé indique pour chacun des 64 blocs si l'appelé a réussi le décodage. Le moment où cette transmission doit avoir lieu est bien sûr connu de l'appelant, qui interrompt sa transmission à ce moment.

Avant de reprendre sa transmission de la super trame en cours, l'appelant émet un compte-rendu de l'accusé, qui indique si l'appelant a réussi le décodage de l'accusé. Ce compte-rendu est constitué d'un bit, qui est protégé avec une forte redondance, par une répétition de 256 fois pour permettre au compte-rendu d'occuper une trame modem. Comme le compte-rendu codé est entrelacé avec les informations utiles sur la voie aller, il bénéficie de ce fait d'une protection extrêmement élevée, qui assure la sécurité ultime de l'ensemble de la procédure.

Ce compte-rendu permet à l'appelé de suivre en permanence le déroulement de la procédure du côté de l'appelant. Par exemple, si l'appelant n'a pas décodé l'accusé, il est possible de convenir à l'avance qu'il considérera tous les blocs concernés par l'accusé comme étant non décodés par l'appelé. Dans la super trame suivante, il émettra alors les compléments de redondance correspondant à ces différents blocs, qui ne sont pas forcément tous au même niveau de retransmission. L'appelé pourra de ce fait connaître le traitement à effectuer sur ces différents blocs, et il connaîtra la longueur de cette super trame.

Ce procédé permet d'éviter la transmission d'un grand nombre d'informations de service sur la voie aller, telles que les numéros de blocs, leur niveau de retransmission etc..., l'appelant et l'appelé déroulant par définition la même procédure, quelle que soit sa complexité.

Lorsque l'appelé n'a pas réussi à décoder un bloc, il garde en mémoire les symboles déjà reçus avec leur note de qualité ; pour les utiliser à la tentative de décodage suivante lorsqu'il aura reçu un complément de redondance.

Compte-tenu de la nature variable des informations à transmettre sur les différents blocs, les super trames peuvent avoir des durées très variables. La durée minimale est obtenue lorsque les 64 blocs nécessitent un incrément de redondance d'une unité. Ceci donne alors une durée de 64 trames modem (environ 7 s). La durée maximale est obtenue lorsque les 64 blocs en sont à la première transmission : comme il existe 9 trames modem par bloc, la durée de la super trame est d'environ 1 mn. Ces durées s'entendent avant entrelacement ou après désentrelacement.

Il est possible de trouver une situation dans lesquelles deux super trames sont émises entre deux accusés de réception.

Cette situation, qui peut sembler complexe, ne pose pas de problème particulier dans la mesure où l'appelant et l'appelé suivent exactement la même procédure unité de temps par unité de temps, d'où l'importance du compte-rendu de l'accusé comme cela peut être vu à la figure 3.

La procédure se déroule de cette manière jusqu'à la fin du fichier à transmettre. Il faut placer ici dans l'hypothèse où l'appelant connaît la taille du fichier au début de la transmission ; et peut de ce fait communiquer cette taille à l'appelé dès le début de la transmission. Le premier bloc de données peut être considérer alors comme particulier et comporter un champ réservé à la transmission du nombre de blocs total.

A la fin de la transmission, comme l'appelant peut se trouver dans la situation où il ne lui reste qu'un faible nombre de blocs à transmettre, et doit en principe attendre l'accusé de réception concernant ces blocs pour transmettre les redondances incrémentales, il faut convenir dans ce cas qu'il a à transmettre par défaut les redondances incrémentales des blocs non encore décodés avant de recevoir l'accusé, dès qu'il n'a plus de nouveaux blocs à transmettre.

L'invention n'est naturellement pas limitée à l'exemple décrit précédemment et d'autres modes de réalisation sont également possibles. Notamment les paramètres précédemment décrits peuvent être adaptés à d'autres types de modem et le principe connu de la redondance incrémentale peut être également utilisé avec des codes en bloc, par exemple des codes de Reed-Solomon.

Il suffit de coder les blocs de données par un code de Reed-Solomon de forte redondance (N,K) et de ne transmettre que N₁ symboles, N₁<N. Le récepteur décode le RS (N,K) en supposant que (N-N₁) symboles ont été effacés (ce qui est l'équivalent du poinçonnage pour les codes convolutionnels).

En supposant que le code de Reed-Solomon permet lui-même de détecter les erreurs, le recours à un code externe pour cette fonction n'est plus nécessaire.

En cas d'échec du décodage, il suffit de transmettre quelques symboles de redondance supplémentaires, en tentant un nouveau décodage et en utilisant les symboles déjà reçus et les nouveaux symboles de redondance. Le fonctionnement général est identique à celui décrit pour les codes convolutionnels.

Le principe du compte-rendu d'accusé peut également être utilisé dans les procédures ARQ n'utilisant pas la redondance incrémentale. C'est le cas par exemple pour la transmission des données à des débits supérieurs à 2 bits/Hz/s, en utilisant des modulations codées. Les modulations codées ne possèdent pas encore une propriété équivalente à la compatibilité en débit.

Le compte-rendu d'accusé permet dans ce cas d'éviter la transmission d'informations de service à chaque bloc de données et permet de sécuriser la liaison, en permettant à l'appelé de connaître le déroulement de la procédure du côté de l'appelant.

Naturellement la procédure ARQ qui a été décrite pour les transmissions sur canal HF s'applique également aux transmissions dans d'autres gammes de fréquence, comme la VHF ou l'UHF. Elle peut s'appliquer à des transmission en évasion de fréquence, par exemple avec les codes de Reed-Solomon décrits plus haut, avec un entrelacement inter-paliers.

## Revendications

1. Procédé de transmission à répétition automatique de blocs de données utilisant des codes poinçonnés (4) compatibles en débit, à l'alternat entre un appelé (7) et un appelant (2) dans lequel les blocs de données sont organisés en trame de longueur variable et entrelacée caractérisé en ce qu'il consiste à faire émettre un accusé de réception (ACCUSE #) par l'appelé dès qu'il a reçu de l'appelant un nombre déterminé de blocs formant une super trame et à faire interrompre la transmission de l'émetteur appelant aux instants d'émission de l'accusé de réception.

2. Procédé selon la revendication 1 caractérisé en ce qu'il consiste à émettre un compte-rendu d'accusé de réception entrelacé avec les données utiles sur la liaison aller.

3. Procédé selon la revendication 1 caractérisé en ce que les blocs de données sont codés par un code détecteur correcteur d'erreurs type Reed-Solomon et protégé par un code convolutionnel (3) de type Hagenauer.

4. Procédé selon la revendication 2 caractérisé en ce qu'il consiste à augmenter la redondance des blocs de données transmis par l'appelant, par un complément de redondance déterminé par des tables de poinçonnage (T₁ ... T₅), dans la super trame qui suit l'instant où doit apparaître un accusé de réception lorsque l'appelant n'a pas reçu l'accusé de réception.

## Patentansprüche

1. Verfahren zur Übertragung von ratenkompatibel punktierten (4) Codes verwendenden Datenblöcken mit automatischer Wiederholung in wechselnder Weise zwischen einem Angerufenen (7) und einem Anrufer (2), bei dem die Datenblöcke in Form von Rahmen aufgebaut sind, deren Länge unterschiedlich ist und die verschachtelt sind, dadurch gekennzeichnet, daß veranlaßt wird, daß von dem Angerufenen eine Empfangsquittung (QUITTUNG #) gesendet wird, sobald er von dem Anrufer eine bestimmte Anzahl von Blöcken empfangen hat, die einen Überrahmen bilden, und veranlaßt wird, daß die von dem Sender des Anrufers ausgehende Übertragung während der Aussendung der Empfangsquittung unterbrochen wird.

2. Verfahren nach Anspruch 1, dadurch gekennzeichnet, daß ein Bericht über die Empfangsquittung ausgesendet wird, der mit den Nutzdaten auf der Sendeverbindung verschachtelt wird.

3. Verfahren nach Anspruch 1, dadurch gekennzeichnet, daß die Datenblöcke durch einen Fehlererfassungs- und -korrektur-Code vom Reed-Solomon-Typ codiert und durch einen Faltungscode (3) vom Hagenauer-Typ geschützt sind.

4. Verfahren nach Anspruch 2, dadurch gekennzeichnet, daß die Redundanz der durch den Anrufer übertragenen Datenblöcke durch ein durch Punkturtabellen (T₁,...,T₅) bestimmtes Redundanzkomplement in dem Überrahmen vergrößert wird, der dem Zeitpunkt folgt, an dem eine Empfangsquittung auftreten sollte, wenn der Anrufer die Empfangsquittung nicht empfangen hat.

## Claims

1. Process for automatic-repetition transmission of data blocks using bit-rate-compatible punctured codes (4) in half-duplex mode between a called (7) and a calling (2) party in which the data blocks are organized into variable-length and interleaved frames, characterized in that it consists in having the called party send an acknowledgement of receipt (ACKNOWLEDGE #) as soon as it has received from the calling party a specified number of blocks forming a superframe and in having the transmission from the calling sender interrupted at the instants of sending of the acknowledgement of receipt.

2. Process according to Claim 1, characterized in that it consists in sending an acknowledgement of receipt report interleaved with the useful data over the outbound link.

3. Process according to Claim 1, characterized in that the data blocks are coded by a Reed-Solomon type error-corrector detector code and protected by a Hagenauer type convolutional code (3).

4. Process according to Claim 2, characterized in that it consists in increasing the redundancy of the data blocks transmitted by the calling party, through a supplementary redundancy determined by puncture tables (T₁...T₅), in the superframe which follows the instant at which an acknowledgement of receipt ought to occur when the calling party has not received the acknowledgement of receipt.
